# EUROPEAN PATENT APPLICATION

(11) **EP 1 633 125 A1**
(43) Date of publication of application: **08.03.2006**
(21) Application number: 05018543.8
(22) Date of filing: 25.08.2005
(51) Int. Cl.: H04N 1/00, H04N 1/387

(54) **Electronic album editing apparatus and control method therefor**

(30) Priority: 03.09.2004 JP 2004257258
(71) Applicant: CANON KABUSHIKI KAISHA, Ohta-ku, Tokyo (JP)
(72) Inventor: Hitaka, Yasoto, Ohta-ku, Tokyo (JP); Noguchi, Toshiyuki, Ohta-ku, Tokyo (JP); Mitani, Shigeyuki, Ohta-ku, Tokyo (JP)
(74) Representative: TBK-Patent

(57) **Abstract**

An arrangement of images in an electronic document having multiple pages, such as an electronic album is disclosed. First, an image/images are arranged on each of the multiple pages in accordance with a first layout. When change of the number of image/images arranged on one page among the multiple pages is detected in response to a user operation, a second layout corresponding to the changed quality is automatically selected, and an image/images are re-arranged on the page in accordance with the second layout. Thereby, it is possible to save the user from the trouble of manually re-arranging the changed number of images.

## Description

### FIELD OF THE INVENTION

The present invention relates to an electronic album editing apparatus for creating an electronic album in which multiple images are arranged on multiple pages, a control method therefor, and a computer readable recording medium in which a program for causing a computer to perform the control method is stored.

### BACKGROUND OF THE INVENTION

Conventionally, on a personal computer (PC), there have been electronic album editing programs for performing editing by arranging images in layouts to provide such that has multiple pages like an album.

In the conventional electronic album editing programs, a user selects images to be arranged on a page. Then, the user moves the images to any positions on the page to arrange them in free layout. Alternatively, the user manually selects one from among some layout candidates and arranges images on the page in accordance with the layout.

In the conventional electronic album editing programs, the user has to perform both of the image selection operation and the layout selection/specification operation, which presents a bad operability problem.

Furthermore, the conventional electronic album editing programs have a problem that, if an image is deleted from a page of the electronic album after images are arranged on the page, a space is generated on the page and causes a bad looking. Or, if an image is further added to a page of the electronic album after images are arranged on the page, images are packed in the page and causes a bad looking. In this case, the user has to manually move the images on the page of the electronic album to adjust distances among the images for a better looking, which is a very troublesome work.

### SUMMARY OF THE INVENTION

The present invention has been made in consideration of the above situation, and has its object to enable to automatically arrange images on a page of an electronic album in accordance with an optimum layout without user operation.

According to the present invention, the foregoing object is attained by providing an electronic document editing apparatus for arranging images in an electronic document including a plurality of pages, the electronic document editing apparatus comprising:
an image arrangement unit that arranges an image/images on the plurality of pages in accordance with first layout data;
a detection unit that detects change of a number of image/images arranged on one a page among the plurality of pages;
a layout data selection unit that selects second layout data based on the number detected by the detection unit; and
an image re-arrangement unit that automatically re-arranges an image/images on one the page among the plurality of pages in accordance with the second layout data selected by the layout data selection unit.

According to the present invention, the foregoing object is also attained by providing a control method for an electronic document editing apparatus for arranging images in an electronic document including a plurality of pages, the control method comprising:
arranging an image/images on the plurality of pages in accordance with first layout data;
detecting change of the number of image/images arranged on a page among the plurality of pages;
selecting second layout data based on the detected number of image/images; and
automatically re-arranging an image/images on the page in accordance with the selected second layout data.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate an embodiment of the invention and, together with the description, serve to explain the principles of the invention.
FIG. 1 is a block diagram showing an example of schematic configuration of an electronic album editing system according to the present invention;
FIG. 2 is a block diagram showing an example of configuration of a PC according to the present invention;
FIG. 3 shows an example of functional configuration of an electronic editing program according to the present invention;
FIGS. 4A and 4B show examples of configuration of image data according to the present invention;
FIG. 5 shows an example of configuration of an image data allocation table according to the present invention;
FIG. 6 shows an example of configuration of a layout file according to the present invention;
FIG. 7 shows an example of layout data held by a layout list according to the present invention;
FIG. 8 is a flowchart for illustrating a process of executing the electronic album editing program on the PC to edit an electronic album according to the present invention;
FIGS. 9A and 9B are flowcharts for illustrating a process of executing the electronic album editing program on the PC to edit an electronic album, according to the present invention;
FIG. 10 shows an example of configuration of electronic album data according to the present invention;
FIG. 11 shows an example of an electronic album editing screen according to the present invention;
FIG. 12 shows an example of a layout data selection screen according to the present invention;
FIG. 13 shows an example of the electronic album editing screen according to the present invention;
FIG. 14 shows an example of the electronic album editing screen according to the present invention;
FIG. 15 shows an example of a change notification dialog according to the present invention; and
FIG. 16 shows an example of a warning dialog according to the present invention.

### DETAILED DESCRIPTION OF THE PREFERRED EMBODIMENT

A preferred embodiment of the present invention will be described in detail in accordance with the accompanying drawings.

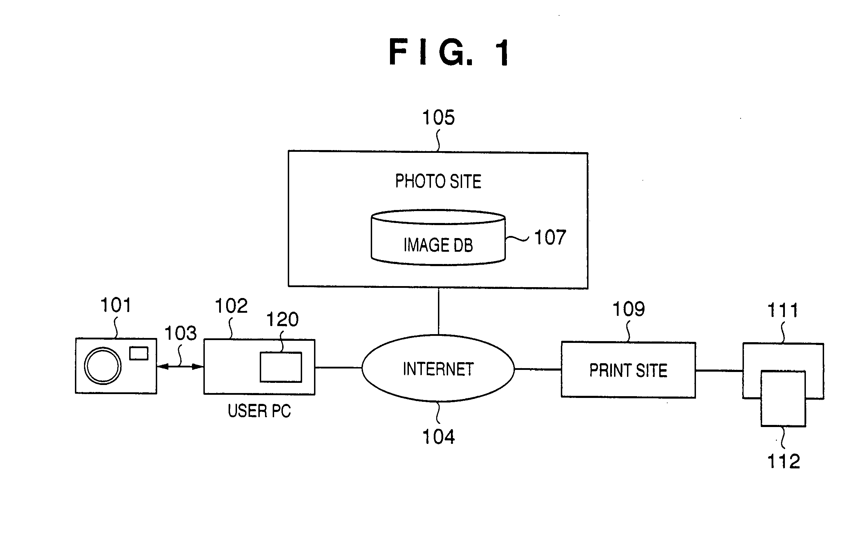

FIG. 1 shows an example of configuration of an information provision system according to an embodiment.

In FIG. 1, reference numeral 101 denotes an image input apparatus which converts an optical image, which is image information, into an electric signal, performs predetermined image processing, and then records and reproduces it as digital information. For example, the image input apparatus 101 is a digital still camera, a digital video camera or a scanner. Reference numeral 102 is a personal computer (PC) operated by a user. Reference numeral 103 is a data transfer interface for transferring image data acquired by the image input apparatus 101 to the user PC 102. The data transfer interface 103 is, for example, a wired interface represented by USB (Universal Serial Bus) and IEEE1394, or a radio interface represented by IrDA and Bluetooth. The image data transferred from the image input apparatus 101 to the user PC 102 via the data transfer interface 103 is stored in the hard disk drive (HDD) of the user PC 102. With regard to the image data transfer from the image input apparatus 101 to the user PC 102, there are two cases, that is, a case where the image input apparatus 101 collectively transfers image data stored in a storage device in accordance with an instruction from an operation system (OS) or a dedicated software installed in the user PC 102; and a case where the OS or dedicated software of the user PC 102 secures a data recording area in the HDD of the user PC 102 and receives image data from the image input apparatus 101, in accordance with a transfer command sent from the image input apparatus 101 to the user PC 102.

On the user PC 102, a browser 120 which has a standard protocol enabling information transfer on the Internet 104 can operate. By causing the browser 120 to operate, the user PC 102 can access a photo site 105 with the use of a protocol such as Hyper Text Transfer Protocol (HTTP) or the like, acquire and analyze web page information created in a description language such as Hyper Text Markup Language (HTML) and extensible Markup Language (XML), and display a web page on the display of the user PC 102. This web page information is linked to multimedia information, such as images and voices, which is managed by the photo site 105 at an image DB 107.

Then, by operating the browser 120, the user PC 102 can download a template or image data for an electronic album to be used when executing an electronic editing program, from the photo site 105 via the Internet 104. The template and image data to be downloaded are stored in the image DB 107.

The user PC 102 also has an electronic album editing program for performing editing by arranging one or more images on an electronic album including one or more pages. Image data to be included in the electronic album are the image data acquired from the image input apparatus 101 and stored in the HDD of the user PC 102 or the image data downloaded from the photo site 105.

Furthermore, the user PC 102 is capable of giving an order of prints of the edited electronic album to a print site 109 via the photo site 105. The print site 109 performs print processing for electronic album data with the use of a printer 111 and outputs an album 112. Though only one print site 109 is shown in FIG. 1, there may exist more print sites.

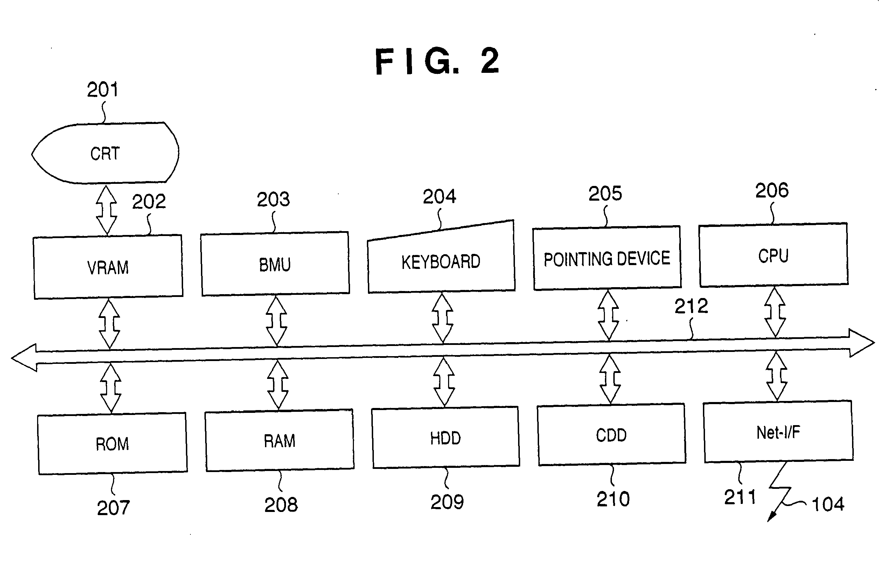

FIG. 2 shows schematic configuration of an information processor corresponding to the user PC 102 according to this embodiment.

In FIG. 2, reference numeral 201 denotes a CRT (cathode ray tube) display, and there are displayed, for example, a document being edited, a graphic, an image, other editing information, an icon, a message, a menu or other user interface information is displayed on its display screen. Reference numeral 202 denotes a VRAM, on which an image to be displayed on the display screen of the CRT display 201 is rendered. The image data generated on the VRAM 202 is transferred to the CRT display 201 in accordance with predetermined specifications, and thereby, an image is displayed on the CRT display 201. Reference numeral 203 denotes a bit move unit (BMU), which controls, for example, data transfer between memories (for example, the VRAM 202 and another memory) or data transfer between a memory and each I/O device (for example, a network interface 211). Reference numeral 204 denotes a keyboard, which has various keys for inputting a document and the like. Reference numeral 205 denotes a pointing device, which is used for specifying an icon, a menu item and other objects displayed on a display screen of the CRT display 201. Reference numeral 206 denotes a central processing unit (CPU), which controls each device connected to the CPU 206 based on a control program stored in a read-only memory (ROM) 207, a hard disk drive (HDD) 209 or a compact disk (CD). Reference numeral 207 denotes a ROM, which holds various control programs and data. Reference numeral 208 denotes a random access memory (RAM), which has a work area for the CPU 206, a data saving area to be used when error processing is performed, a control program load area and the like. Reference numeral 209 denotes an HDD. The HDD 209 can store each control program to be executed within the user PC 102 and contents. For example, the browser 120, electronic album data, the electronic album editing program and the like are stored in the HDD 209. Reference numeral 210 denotes a CD drive (CDD), which controls access to a CD. Reference numeral 211 denotes a network interface, which can communicate with other information processors, a printer and the like via the Internet 104. Reference numeral 212 denotes a CPU bus, which includes an address bus, a data bus and a control bus. A control program can be provided for the CPU 206 from the ROM 207, the HDD 209 or the FDD 210, or from other information processors and the like through the network interface 211 via the Internet 104.

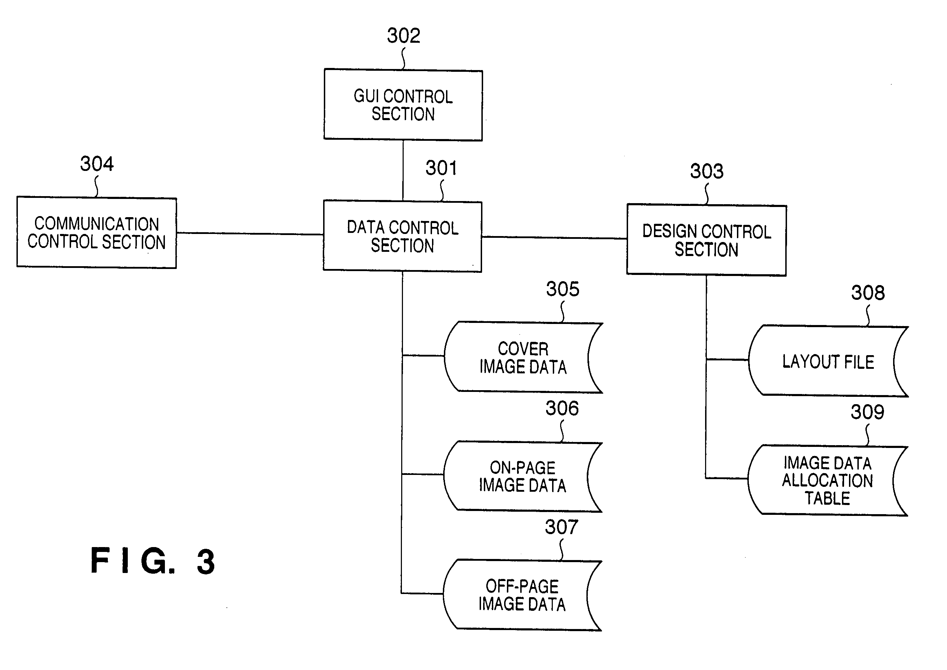

FIG. 3 is a block diagram showing functional configuration of an electronic album editing program according to this embodiment. Reference numeral 301 denotes a data control section for managing electronic album data and controlling the entire electronic album editing program. Reference numeral 302 denotes a GUI control section for controlling the graphical user interface (GUI) of the electronic album editing program to provide a user with operation means and means for displaying the content of editing. Reference numeral 303 denotes a design control section for managing design information, such as a template file, a layout file 308, an image data allocation table 309 and the like, used for editing electronic album data. Reference numeral 304 denotes a communication control section for creating printing data required for order of printing based on edited electronic album data and performing communication of the printing data and the information required for order of printing.

Among the electronic album data managed by the data control section 301, there are cover image data 305 to be allocated to the cover of an electronic album, on-page image data 306 to be allocated to each page in the electronic album, and off-page image data 307 which are not allocated to a page in the electronic album. The off-page image data 307 are controlled to be displayed on a saved image display area in an electronic album editing screen to be described later. In the layout file 308, there are recorded information for determining the arrangement positions of images and character strings attached to the image data on each two-page spread in the electronic album. The image data allocation table 309 is managed by the design control section 303, and there is recorded information related the quantity of images to be allocated to each two-page spread in the electronic album. In this embodiment, an electronic album is constituted by a cover page and body pages, and description will be made on a case where the cover page and the body pages are separately handled. However, the present invention can be realized if the cover page and the body pages similarly handled without distinguishing them.

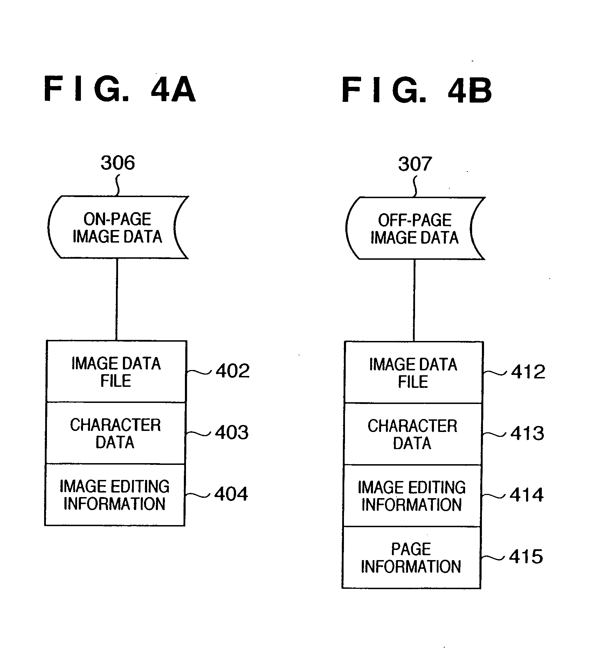

FIG. 4A shows an example of data configuration of the on-page image data 306, and FIG. 4B shows an example of data configuration of the off-page image data 307. Image data files 402 and 412 of the on-page image data 306 and the off-page image data 307 may be file data or paths indicating storage locations of file data. Reference numerals 403 and 413 denote character data, and character data attached to image data are held. Reference numerals 404 and 414 denote image editing information, and the content of editing provided for the image data is held. The content of editing is, for example, clipping, color or contrast adjustment, a rotation operation, and the like. Reference numeral 415 denotes page information, in which there is stored information about a body page editing area of which two-page spread, the image has been moved from to the saved image display area. The value stored in the page information 415 is displayed on the saved image display area together with the image.

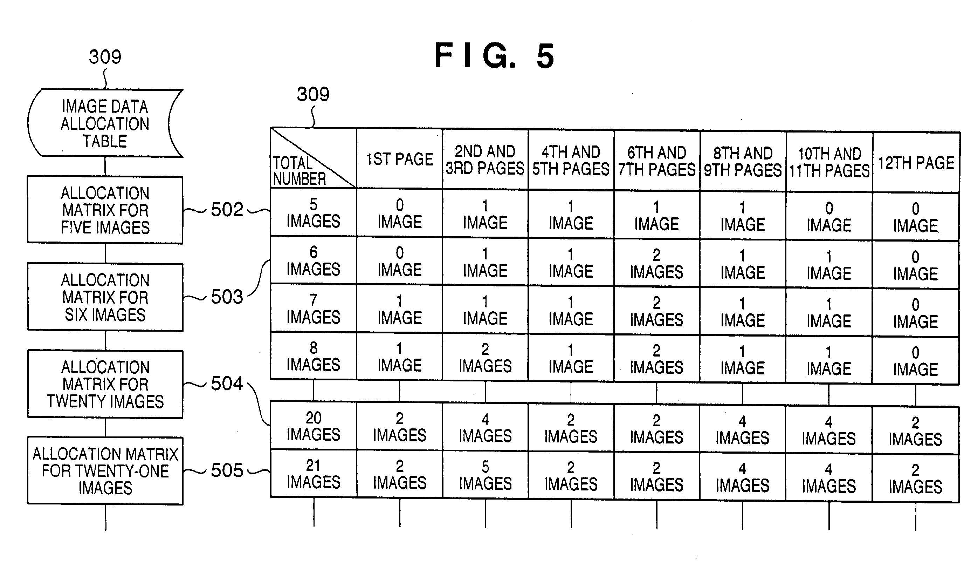

FIG. 5 shows an example of an image data allocation table 309 according to this embodiment. How many images are to be allocated to each body page of an electronic album is determined with the use of the image data allocation table 309 based on the total number of body pages of the electronic album and the number of images selected to be included in the electronic album. The image data allocation table 309 exists for each total number of body pages of an electronic album. Description will be made below with reference to FIG. 5, on an image data allocation table 309 for the total page number of 12 as an example, for simplification of the description. According to the image data allocation table 309 in FIG. 5, if the selected number of images to be included in an electronic album is eight, then one image is allocated to the first page, two images are allocated to the second and third pages, one image is allocated to the fourth and fifth pages, two images are allocated to the sixth and seventh pages, one image is allocated to the eighth and ninth pages, and one image is allocated to the tenth and eleventh pages, and no image is allocated to the twelfth page.

Image data of images selected to be included in an electronic album are allocated in any order specified by the user, in the order of selection of the image data, in the order of the dates when the image data were taken, in the order of the names of the image data or the like.

Though description is made on a case where images selected to be included in an electronic album are arranged on both pages of two-page spread in this embodiment, arrangement can be realized similarly when images are to be arranged only on one page of two-page spread.

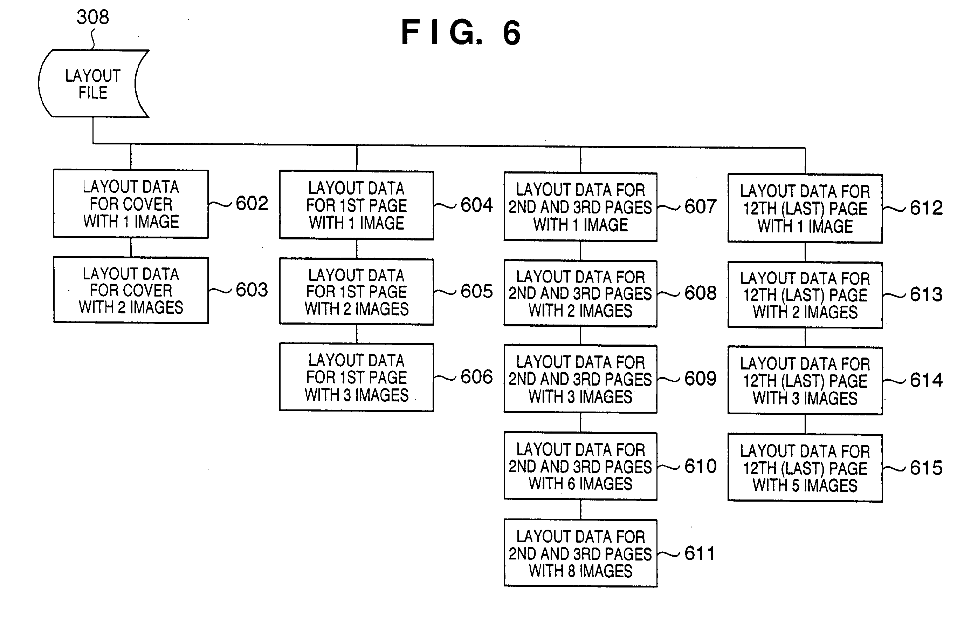

FIG. 6 shows an example of configuration of a layout file 308 according to this embodiment. The layout file exists for each total number of body pages of an electronic album. Description will be made below with reference to FIG. 6, on a layout file for the total body page number of 12, for simplification of the description.

The layout file 308 shown in FIG. 6 is a layout file for the total body page number of 12. The layout lists for a cover page, the layout lists for the top first page and the layout lists for the last twelfth page are layout lists for arranging images on one page on one side. The remaining layout lists for the second and third pages, the fourth and fifth pages, ... (omitted) ... and the tenth and eleventh pages are layout lists for arranging images on both pages on both sides. The layout lists for a cover page include layout lists corresponding to cases where the number of images is one and two, respectively. The layout lists for the top first page include layout lists corresponding to cases where the number of images is one, two and three, respectively. Furthermore, the layout lists for the last twelfth page include layout lists corresponding to cases where the number of images is one, two, three and five, respectively. Similarly, the layout lists for the second and third pages, for the fourth and fifth pages, the sixth and seventh pages ... and the tenth and eleventh pages include a layout list for each optimum number of images.

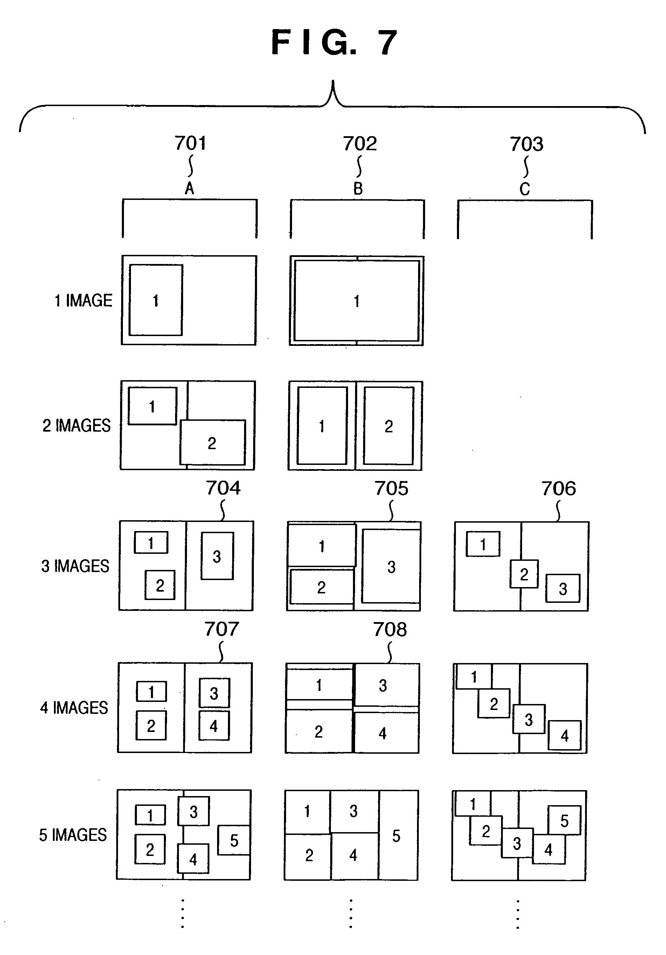

The layout lists 602 to 615 have one or more kinds of layout data for each number of images. FIG. 7 shows an example of layout data held by layout lists. FIG. 7 shows that there are layout lists corresponding to the number of images from one to five, for a particular page, and each layout list has two or three kinds of layout data. Furthermore, the layout lists are classified in layout data A701, layout data B702 and layout data C703 and configured. In this embodiment, the layout data of the layout data A is used as a default. Though FIG. 7 shows a case where there are three kinds of layout data, the number is not limited.

Arrangement of images on each page is determined by the number of images allocated to the page and the layout data of a corresponding layout list. For example, if the number of images allocated to the second and third pages is three, then three images are arranged on the second and third pages at positions specified by the layout data included in the layout list 609 for the second and third pages with three images.

The layout file 308 does not have a layout list corresponding to each number of images for each page. For example, as shown in FIG. 6, there are layout lists corresponding to one, two, three, six and eight images for the second and three pages, while there are not layout data corresponding to four or seven images.

The user PC 102 executes the electronic album editing program and determines allocation of images to each page and arrangement of them with the use of the above-described image data allocation table 309 and layout file 308 to create the electronic album based on the total number of body pages and the number of images selected to be included in an electronic album.

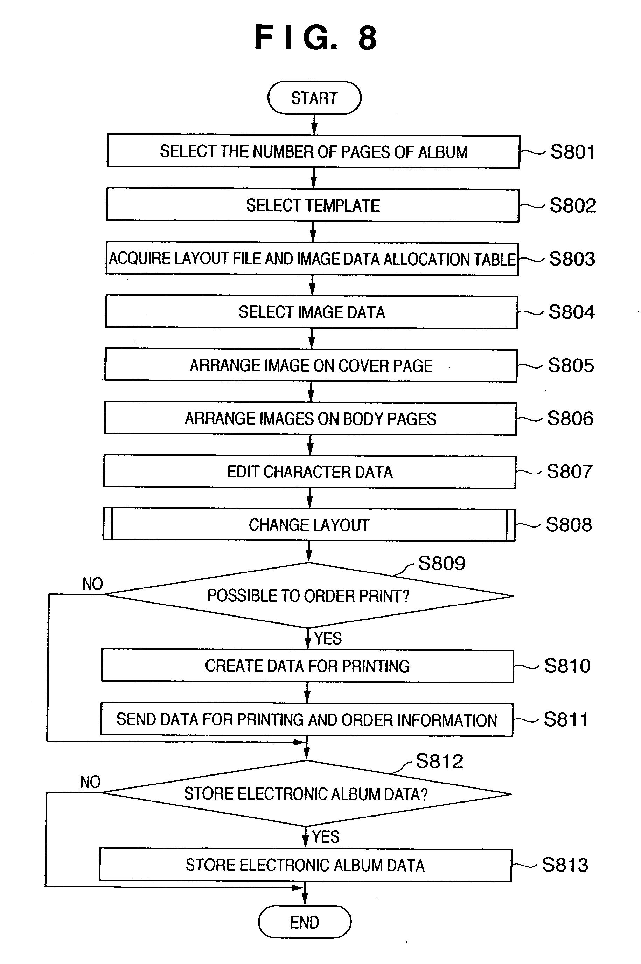

FIG. 8 is a flowchart illustrating a flow of a process in which the CPU 206 of the user PC 102 according to this embodiment reads the electronic album editing program from the ROM 207 or the HDD 209, activates it, and then executes it to edit an electronic album.

At step S801, the album size and the total number of body pages are selected and determined. The album size is the paper size, such as the A4 size and the B5 size, of an album 112 to be outputted by the printer 111 based on electronic album data.

At step S802, a template file to be applied to the electronic album is selected and determined.

At step S803, a layout file 308 and an image data allocation table 309 which are associated with the template file determined at step S802 are acquired by the design control section 303.

At step S804, images to be included in the electronic album are selected. The range of a selectable number of images is set based on the total number of body pages determined at step S301 and the image data allocation table 309 acquired at step S303. Cover image data 305 to be arranged on the cover page of the electronic album are selected. Then, copies of the selected images are acquired by the data control section 301 into a storage area specified by the electronic album editing program.

At step S805, the cover image data 305 selected at step S804 are arranged on the cover page of the electronic album. The layout file 308 is read based on the total number of body pages determined at step S801. Then, the cover layout list 602 or 603 is determined based on the number of the cover image data 305 selected at step S804. The cover image data 305 are arranged on the cover page based on the default layout data included in the determined cover layout list 602 or 603. The cover includes a front cover and a back cover.

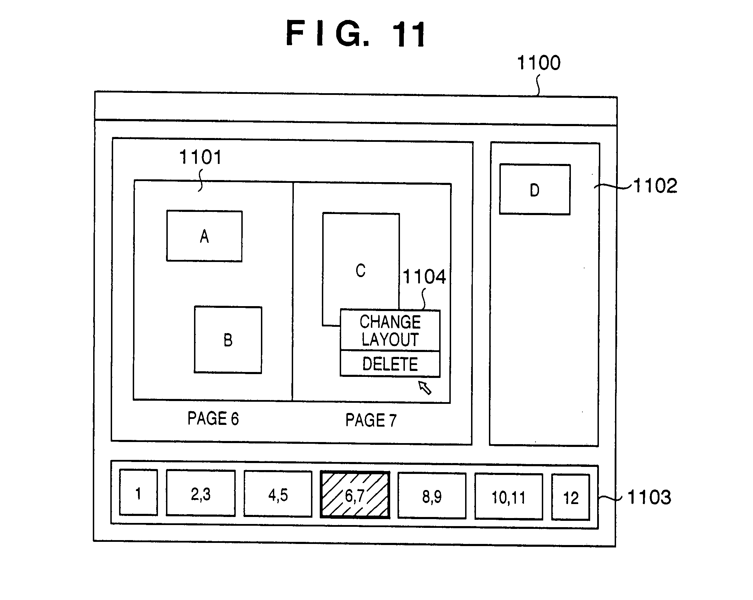

At step S806, the on-page image data 306 selected at step S804 are arranged on each body page in the electronic album. First, the image data allocation table 309 is read based on the total number of body pages determined at step S801 and the total number of on-page image data 306 selected at step S804. Then, images are allocated to respective body pages of the electronic album in accordance with the read image data allocation table 309. Next, the layout file 308 is read based on the total number of body pages determined at step S801. Then, a layout list for each page is determined based on the number of images of the on-page image data 306 allocated to each page. Images of the on-page image data 306 are arranged on each body page of the electronic album based on the default layout data of the layout list for each page. This process of arranging the images of the on-page image data 306 is performed for each of all the body pages. Then, an electronic album editing screen 1100 as shown in FIG. 11 to be described later, is displayed on the CRT 201 of the user PC 102. On pages to which the on-page image data 306 have not been allocated in accordance with the image data allocation table 309, images of the on-page image data 306 are not arranged.

At step S807, editing of character strings represented on the electronic album is performed, such as input of character strings indicating a comment on an image, and selection and determination of the font type, font color and font size of the inputted character strings.

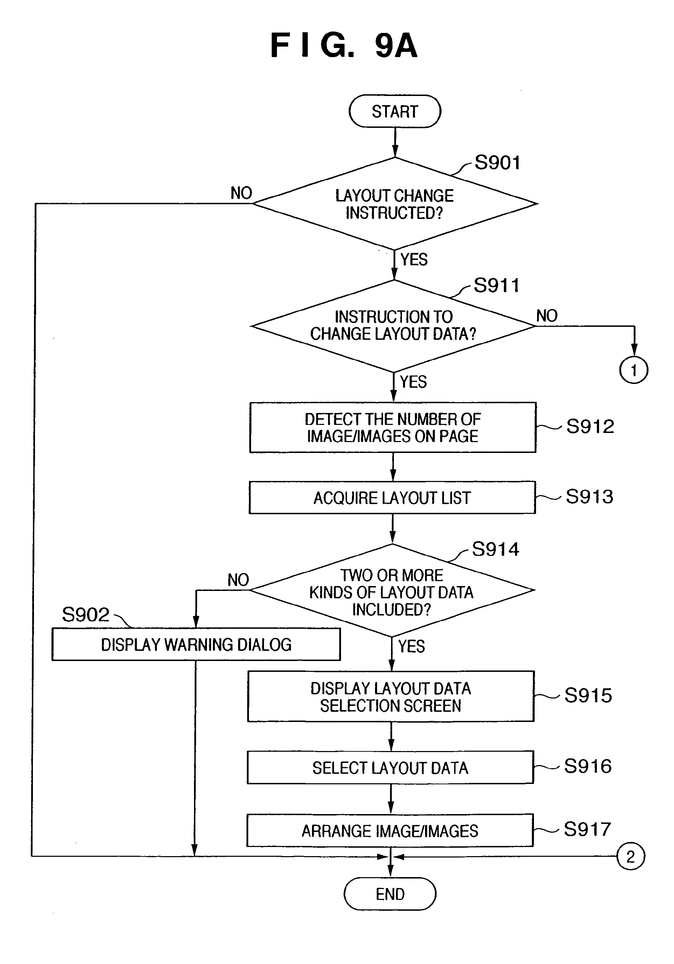

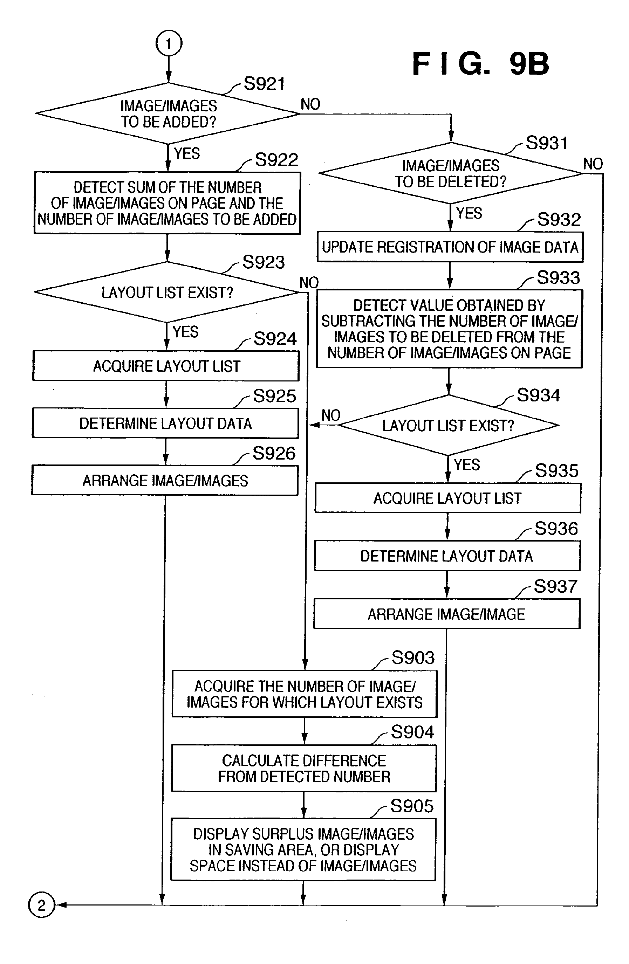

At step S808, layout change processing is performed, such as exchange of images on each page of the electronic album, addition of an image to a page, deletion of an image from a page and change in arrangement of pages. This layout change processing will be described in detail with FIGS. 9A and 9B to be described later.

Next, at step S809, processing for confirming whether or not the electronic album data created as described above has a sufficient form and satisfies conditions required for order of printing. Specifically, it is confirmed whether the resolution of on-page image data corresponding to images displayed in the cover page and body page editing areas, which are included in the electronic album data, indicates a value enough for printing.

At step S810, data for printing, which is required to order printing of the album, is created based on the electronic album data. The data for printing is data for instructing that the on-page image data arranged on each page of the electronic album should be similarly arranged on a physical album to be printed.

At step S811, the data for printing created at step S810 and order information required for order of printing are sent to the photo site 105. The photo site 105 transfers them to the print site 109.

At step S812, it is confirmed whether or not to store the electronic album data.

If it is confirmed at step S812 that the electronic album data is to be stored, then, at step S813, the created electronic album data is stored in the HDD 209 of the user PC 102.

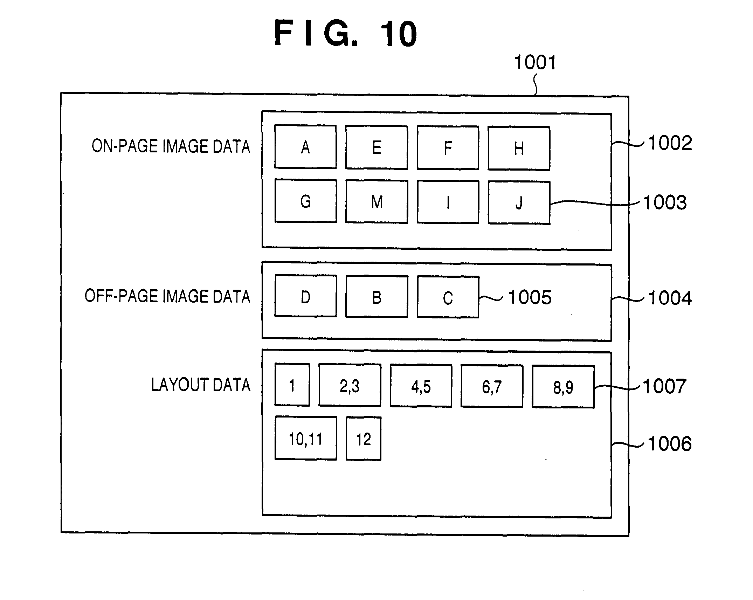

FIG. 10 is a data configuration diagram showing an example of configuration of electronic album data to be stored. Reference numeral 1001 denotes entire electronic album data. Reference numeral 1002 denotes an area for storing on-page image data 306. Reference numeral 1003 denotes the on-page image data 306. Reference numeral 1004 denotes an area for storing off-page image data 307, and reference numeral 1005 denotes the off-page image data 307. Reference numeral 1006 denotes an area for storing layout data used for arrangement for each body page, and reference numeral 1007 denotes the layout data. The layout data 1007 may further include the order of arranging an image/images to be arranged on each page, the number of the image/images, positions at which the image/images are arranged, positions of frames in which character strings attached to the image data are to be displayed, and the like.

In this embodiment, by including the off-page image data 307 in the electronic album data 1001, image data which have not been registered as on-page image data are also displayed when an electronic album is re-edited, and thereby, it is possible for a user to easily confirm an image which he determined to be unnecessary for the electronic album previously.

FIGS. 9A and 9B are flowcharts for illustrating the layout change processing to be performed at step S808 according to this embodiment.

At step S901, it is determined whether a page layout change instruction has been issued by a user operation. As the page layout change, for example, exchange of images arranged on a page of an electronic album, addition/deletion of an image to/from a page, movement of an image from one page to another page, and change of selection of layout data for a page are included.

In FIG. 11, reference numeral 1100 denotes an electronic album editing screen. Reference numeral 1101 denotes a body page editing area on which a page to be edited is displayed. Reference numeral 1102 denotes a saved image display area for displaying an image/images which have been selected at step S804 but have been determined not to be allocated to a page by a subsequent editing operation. Reference numeral 1103 denotes a page list display area in which numbers of all pages included in the electronic album are displayed. In the page list display area 1103, in order to clearly indicate a page being edited, the page number of the page is highlighted and displayed.

In FIG. 11, as an example, the body page to be edited is the sixth and seventh pages; it is displayed in the body page editing area 1101 that images A, B and C are arranged in accordance with the layout data for the sixth and seventh page with three images; and the page number of the sixth and seventh pages are highlighted and displayed in the page list display area 1103. There is displayed in the saved image display area 1102 an image D which has been determined not to be allocated to a page as a result of an editing operation.

Though only page numbers are displayed in the page list display area 1103 in FIG. 11, thumbnail images which show images of respective pages may be displayed.

Reference numeral 1104 denotes an instruction list, which is displayed when a right click input on the pointing device 205 is received on the body page editing area 1101.

On the initial screen of the electronic album editing screen 1100 displayed at step S806, the image D does not exist in the saved image display area 1102.

At step S911, it is determined whether the page layout change instruction is "change of layout data for the page". Specifically, by the user inputting a right-click operation of the pointing device 205 on the body page editing area 1101, the instruction list 1104 is displayed. Then, if the user selects and inputs "layout change" from the instruction list 1104 by operating the pointing device 205, it is determined that "change of layout data for the page" has been instructed.

If it is determined that the page layout change instruction is "change of layout data for the page" at step S911, then, at step S912, the number of images displayed in the body page editing area 1101 is detected.

At step S913, a layout list corresponding to the number detected at step S912 is acquired.

At step S914, it is determined whether the layout list acquired at step S913 includes two or more kinds of layout data.

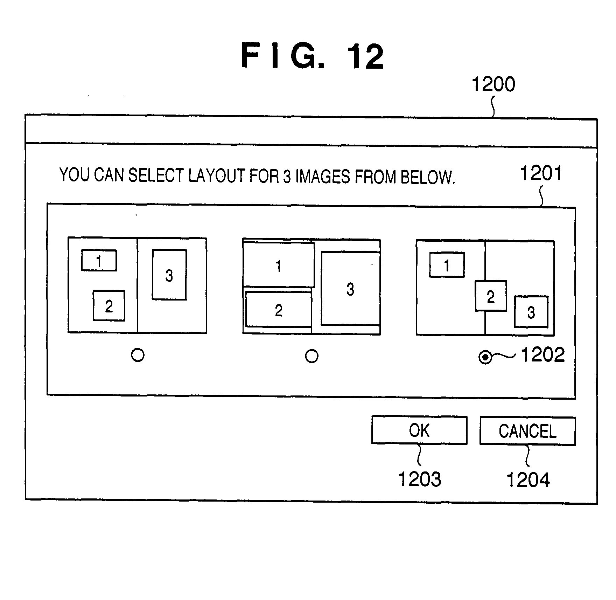

If it is determined at step S914 that two or more kinds of layout data are included, then at step S915, the layout data included in the layout list are displayed in a layout data selection screen 1200 as shown in FIG. 12. FIG. 12 shows an example in the case where it is detected that three images are displayed in the body page editing area 1101. In FIG. 12, three kinds of layout data 1201 included in the layout list are displayed. Reference numeral 1203 denotes an OK button, and reference numeral 1204 denotes a cancel button. When an operation of pressing the OK button 1203 is inputted, layout data for which a corresponding checkbox is on is selected and determined, and the layout data selection screen 1200 is undisplayed. When an operation of pressing the cancel button 1204 is inputted, change of layout data for the page is cancelled, and the layout data selection screen 1200 is undisplayed. The layout data 1201 shown in FIG. 12 are displayed with layout data used when images were arranged in the body page editing area 1101 included therein. If the layout data used for the current image arrangement is selected again, the process may be terminated without performing the subsequent processing. The layout data used for the current image arrangement may not be displayed as the layout data 1201.

At step S916, the layout data for which the corresponding checkbox 1202 is on is selected from among the layout data 1201 in the layout data selection screen 1200 displayed at step S915.

At step S917, the on-page image data 306 displayed in the body page editing area 1101 are arranged in accordance with the layout data selected at step S916.

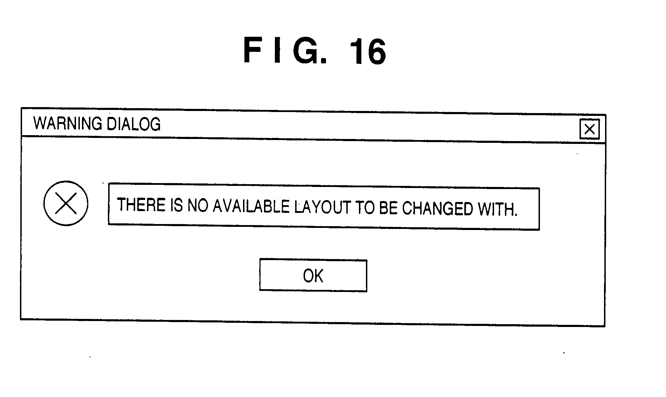

Meanwhile, if it is determined at step S914 that there are not two or more kinds of layout data, then a warning dialog is displayed at step S902. FIG. 16 shows an example of the warning dialog.

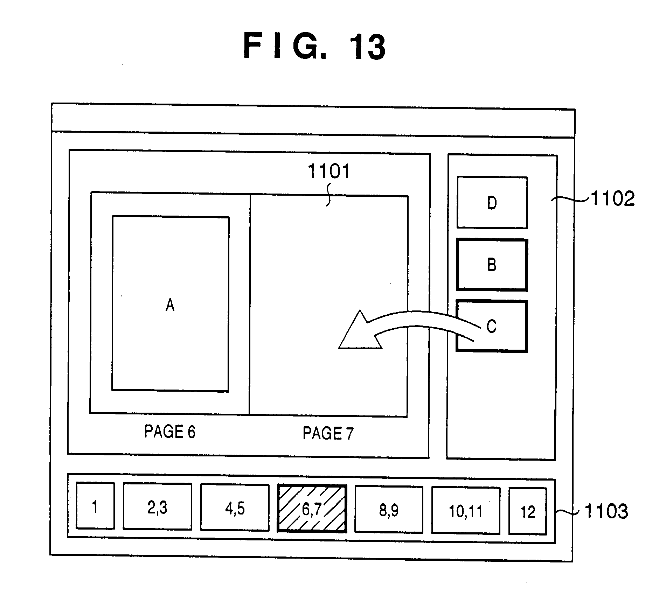

At step S921, it is determined whether the page layout change instruction is "addition of an image/images to the page". Specifically, if the user instructs that an image displayed in the saved image display area 1102 should be moved to the body page editing area 1101 with the use of the pointing device 205, as shown in FIG. 13, then it is determined that "addition of an image/images to the page" has been instructed. FIG. 13 shows a conceptual diagram in the case where the user selects an image C from among images B, C and D displayed in the saved image display area 1102 and instructs that it should be added to the body page editing area 1101, by drag and drop with the use of the pointing device. It is also possible to select multiple images at a time from among images displayed in the saved image display area 1102.

At step S922, a total number obtained by adding the number of images specified to be added at step S921 to the number of images displayed in the body page editing area 1101 is detected.

At step S923, it is determined whether there is a layout list corresponding to the total number detected at step S922.

If it is determined at step S923 that there is such a layout list, then the layout list is acquired at step S924.

At step S925, a default layout data in the layout list acquired at step S924 is selected and determined.

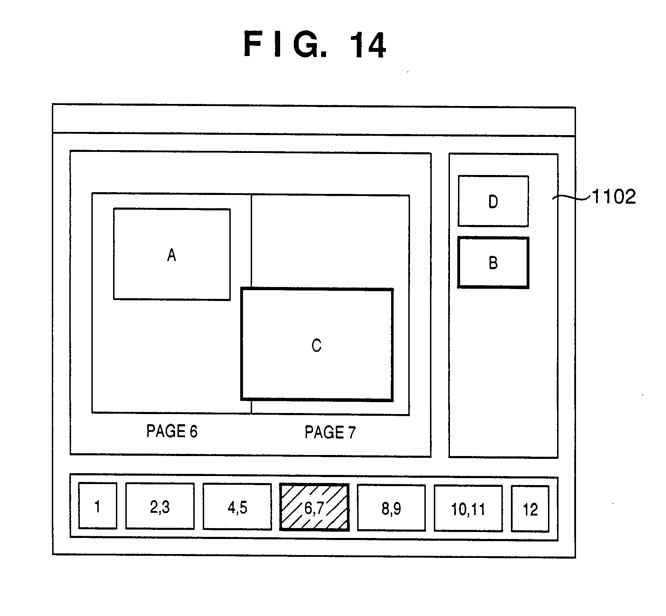

At step S926, the image specified to be added at step S921 and the images already displayed in the body page editing area 1101 are arranged in accordance with the layout data determined at step S925. FIG. 14 shows an example of a screen to be displayed after the arrangement. FIG. 14 shows an example in the case where, as a result of newly adding the image C to the state in which the image A is arranged in accordance with layout data for one image as shown in FIG. 13, the total number of images displayed in the body page editing area 1101 becomes two, and therefore, the images A and C are arranged in the body page editing area 1101 in accordance with default layout data for the sixth and seventh pages with two images. FIG. 14 also shows that the image C is undisplayed in the saved image display area 1102. In this case, the image C is registered and updated as on-page image data 306 from off-page image data 307 by the data control section 301.

Though an image to be added is selected from among images displayed in the saved image display area 1102 in this embodiment, the image may be selected from among images stored in the HDD 209 of the user PC 102, from among images held by an application program different from the electronic album editing program, or from among images stored in the image DB 107 of the photo site 105.

At step S931, a process of determining whether the page layout change instruction is "deletion of an image/images from the page" is performed. Specifically, if the user instructs that an image/images displayed in the body page editing area 1101 should be moved to the saved image display area 1102, with the use of the pointing device 205, then it is determined that "deletion of an image/images from a page" has been instructed. Alternatively, by the user inputting a right-click operation of the pointing device 205 on the body page editing area 1101, the instruction list 1104 is displayed. Then, if the user selects and inputs "deletion" from the instruction list 1104, it is determined that "deletion of an image/images from a page" has been instructed.

At step S932, registration of the image data of the image/images specified to be deleted from the page at step S931 is updated by the data control section 301. If it is instructed that the image/images should be moved to the saved image display area 1102, the registration is updated so that the image data stored as on-page image data 306 is stored as off-page image data 307. Then, the image of the image data is displayed in the saved image display area 1102. On the other hand, if it is instructed that the image/images should be deleted by selecting and inputting "deletion" from the page layout change instruction list 1104, the image data of the image is deleted from the storage area on the HDD 209 managed by the data control section 301.

At step S933, a total number obtained by subtracting the number of images specified to be deleted at step S931 from the number of images displayed in the body page editing area 1101 is detected.

At step S934, it is determined whether there is a layout list corresponding to the total number detected at step S933.

If it is determined that there is such a layout list at step 934, then the layout list is acquired at step S935.

At step S936, default layout data in the layout list acquired at step S935 is selected and determined.

At step S937, images left after the image specified to be deleted at step S931 are removed from the images already displayed in the body page editing area are arranged in accordance with the layout data determined at step S936.

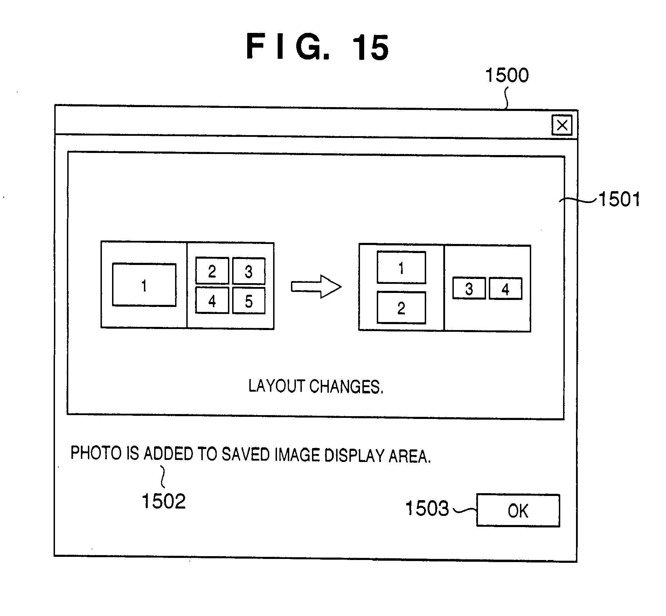

At step S924 or S935, it may be notified to the user that the image arrangement displayed in the body page editing area 1101 is to be changed by displaying a change notification dialog on the CRT display 201 of the user PC 102. An example of the dialog screen is shown in FIG. 15. In FIG. 15, the user is notified thereof by displaying arrangement of images before and after change 1501 and indication 1502 to the effect that an image is to be displayed in the saved image display area 1102. The user may instruct an operation of pressing the OK button 1503 with the use of the pointing device 205 to undisplay the change notification dialog screen and perform the process of changing the image arrangement in accordance with the newly set layout data.

If it is determined that there is not a layout list at step S923 or S934, then the process proceeds to step S903. In the case of a process from step S923, the largest number of images below the detected number of images, for which a layout list is prepared, is acquired. In the case of a process from step S934, the smallest number of images above the detected number of images, for which a layout list is prepared, is acquired.

Next, at step S904, the difference between the number acquired at step S903 and the number detected at step S922 or S933 is calculated.

At step S905, in the case of the process from step S923, the number images calculated at step S904 are selected from among images specified to be moved to the body page editing area 1101 and displayed in the saved image display area 1102. In this case, images to be added are displayed in the body page editing area 1101. A dialog may be displayed for notifying that change is made to display images which have been displayed in the body page editing area 1101, in the saved image display area 1102.

Alternatively, at step S905, in the case of the process from step S934, images are displayed in the body page editing area 1101 with blank space in accordance with layout data of a layout list corresponding to the obtained number. A dialog is then displayed for notifying that an image should be added to fill the blank space.

In this embodiment, the numbers of images for the page displayed in the body page editing area 1101, for which a layout list exists, may be acquired and displayed on the electronic album editing screen 1100, before performing processings at steps S912, S922 and S933. Thereby, the user can know the changeable number of images in advance.

Though description has been made on an electronic album editing program as an example in this embodiment, the present invention is not limited thereto and can be similarly applied to a program such as an electronic presentation editing program or an electronic document editing program for arranging images or text, graphics and a background.

### <Other Embodiments>

The invention can be implemented by supplying a software program, which implements the functions of the foregoing embodiments, directly or indirectly to a system or apparatus, reading the supplied program code with a computer of the system or apparatus, and then executing the program code. In this case, so long as the system or apparatus has the functions of the program, the mode of implementation need not rely upon a program.

Accordingly, since the functions of the present invention are implemented by computer, the program code installed in the computer also implements the present invention. In other words, the claims of the present invention also cover a computer program for the purpose of implementing the functions of the present invention.

In this case, so long as the system or apparatus has the functions of the program, the program may be executed in any form, such as an object code, a program executed by an interpreter, or scrip data supplied to an operating system.

Example of storage media that can be used for supplying the program are a floppy disk, a hard disk, an optical disk, a magneto-optical disk, a CD-ROM, a CD-R, a CD-RW, a magnetic tape, a non-volatile type memory card, a ROM, and a DVD (DVD-ROM and a DVD-R).

As for the method of supplying the program, a client computer can be connected to a website on the Internet using a browser of the client computer, and the computer program of the present invention or an automatically-installable compressed file of the program can be downloaded to a recording medium such as a hard disk. Further, the program of the present invention can be supplied by dividing the program code constituting the program into a plurality of files and downloading the files from different websites. In other words, a WWW (World Wide Web) server that downloads, to multiple users, the program files that implement the functions of the present invention by computer is also covered by the claims of the present invention.

It is also possible to encrypt and store the program of the present invention on a storage medium such as a CD-ROM, distribute the storage medium to users, allow users who meet certain requirements to download decryption key information from a website via the Internet, and allow these users to decrypt the encrypted program by using the key information, whereby the program is installed in the user computer.

Besides the cases where the aforementioned functions according to the embodiments are implemented by executing the read program by computer, an operating system or the like running on the computer may perform all or a part of the actual processing so that the functions of the foregoing embodiments can be implemented by this processing.

Furthermore, after the program read from the storage medium is written to a function expansion board inserted into the computer or to a memory provided in a function expansion unit connected to the computer, a CPU or the like mounted on the function expansion board or function expansion unit performs all or a part of the actual processing so that the functions of the foregoing embodiments can be implemented by this processing.

As many apparently widely different embodiments of the present invention can be made without departing from the spirit and scope thereof, it is to be understood that the invention is not limited to the specific embodiments thereof except as defined in the appended claims.

An arrangement of images in an electronic document having multiple pages, such as an electronic album is disclosed. First, an image/images are arranged on each of the multiple pages in accordance with a first layout. When change of the number of image/images arranged on one page among the multiple pages is detected in response to an user operation, a second layout corresponding to the changed quantity is automatically selected, and an image/images are re-arranged on the page in accordance with the second layout. Thereby, it is possible to save the user from the trouble of manually re-arranging the changed number of images.

## Claims

1. An electronic document editing apparatus for arranging images in an electronic document including a plurality of pages, the electronic document editing apparatus comprising:
an image arrangement unit that arranges an image/images on the plurality of pages in accordance with first layout data;
a detection unit that detects change of a number of image/images arranged on a page among the plurality of pages;
a layout data selection unit that selects second layout data based on the number detected by said detection unit; and
an image re-arrangement unit that automatically re-arranges an image/images on the page in accordance with the second layout data selected by said layout data selection unit.

2. The electronic document editing apparatus according to claim 1, further comprising an input unit that inputs any of an instruction to delete an image arranged in the page among the plurality of pages from the page and an instruction to newly add an image arranged outside the page to the page,
wherein said detection unit performs the detection when any of the instructions is inputted by said input unit.

3. The electronic document editing apparatus according to claim 2, further comprising a display unit that displays an image/images arranged within the page among the plurality of pages in a page editing area,
wherein said input unit inputs an instruction to delete an image arranged in a page among the plurality of pages from the page by moving the image to outside the page editing area by a drag and drop operation with the use of an input device.

4. The electronic document editing apparatus according to claim 2, further comprising a display unit that displays an image/images arranged within the page among the plurality of pages in a page editing area,
wherein said input unit inputs an instruction to newly add an image to be arranged in the page to the page by moving the image from outside the page editing area into the page editing area by a drag and drop operation with the use of an input device.

5. The electronic document editing apparatus according to claim 1, further comprising:
a list display unit that displays a list of layout data candidates corresponding to the number of image/images detected by said detection unit; and
a second layout data selection unit that selects second layout data from among the layout data displayed by said list display unit.

6. The electronic document editing apparatus according to claim 1, further comprising:
a quantity limiting unit that sets a limiting value for a number of images which can exist in a page among the plurality of pages; and
a notification unit that notifies the limiting value set by said quantity limiting unit.

7. The electronic document editing apparatus according to claim 1, further comprising a number-of-page limiting unit that sets a limiting value for the number of pages to be included in the electronic document.

8. A control method for an electronic document editing apparatus for arranging images in an electronic document including a plurality of pages, the control method comprising:
arranging an image/images on the plurality of pages in accordance with first layout data;
detecting change of the number of image/images arranged on a page among the plurality of pages;
selecting second layout data based on the detected number of image/images; and
automatically re-arranging an image/images on the page in accordance with the selected second layout data.

9. The control method according to claim 8, further comprising inputting any of an instruction to delete an image arranged in the page among the plurality of pages from the page and an instruction to newly add an image arranged outside the page to the page,
wherein the number of image/images is detected when any of the instructions is inputted.

10. The control method according to claim 9, further comprising displaying an image/images arranged within one page among the plurality of pages in a page editing area,
wherein said instruction to delete an image arranged in one page among the plurality of pages from the page is inputted by moving the image to outside the page editing area by a drag and drop operation with the use of an input device.

11. The control method according to claim 9, further comprising displaying an image/images arranged within one page among the plurality of pages in a page editing area,
wherein said instruction to newly add an image to be arranged in the page to the page is inputted by moving the image from outside the page editing area into the page editing area by a drag and drop operation with the use of an input device.

12. The control method according to claim 8, further comprising:
displaying a list of layout data candidates corresponding to the detected number of image/images; and
selecting second layout data from among the layout data in the displayed list.

13. The control method according to claim 8, further comprising:
setting a limiting value for the number of images which can exist in one page among the plurality of pages; and
notifying the set limiting value.

14. The control method according to claim 8, further comprising setting a limiting value for the number of pages to be included in the electronic document.

15. A computer program product stored on a computer-readable memory medium and embodying a computer-executable program for implementing a method for editing an electronic document, which has a plurality of pages and arranged images, the computer program comprising:
computer readable program code means for arranging an image/images on the plurality of pages in accordance with first layout data;
computer readable program code means for detecting change of the number of image/images arranged on a page among the multiple pages;
computer readable program code means for selecting second layout data based on the detected number of image/images; and
computer readable program code means for automatically re-arranging an image/images on the page in accordance with the selected second layout data.

16. The computer program product according to claim 15, wherein the computer program further comprises computer readable program code means for inputting any of an instruction to delete an image arranged in the page among the plurality of pages from the page and an instruction to newly add an image arranged outside the page to the page,
wherein the number of image/images is detected when any of the instructions is inputted.

17. The computer program product according to claim 16,
wherein the computer program further comprises computer readable program code means for displaying an image/images arranged within one page among the plurality of pages in a page editing area,
wherein said instruction to delete an image arranged in one page among the plurality of pages from the page is inputted by moving the image to outside the page editing area by a drag and drop operation with the use of an input device.

18. The computer program product according to claim 16, wherein the computer program further comprises computer readable program code means for displaying an image/images arranged within one page among the plurality of pages in a page editing area,
wherein said instruction to newly add an image to be arranged in the page to the page is inputted by moving the image from outside the page editing area into the page editing area by a drag and drop operation with the use of an input device.

19. The computer program product according to claim 15,
wherein the computer program further comprises:
computer readable program code means for displaying a list of layout data candidates corresponding to the detected number of image/images; and
computer readable program code means for selecting second layout data from among the layout data in the displayed list.

20. The computer program product according to claim 15,
wherein the computer program further comprises:
computer readable program code means for setting a limiting value for the number of images which can exist in one page among the plurality of pages; and
computer readable program code means for notifying the set limiting value.

21. The computer program product according to claim 15, wherein the computer program further comprises computer readable program code means for setting a limiting value for the number of pages to be included in the electronic document.
